# EUROPEAN PATENT APPLICATION

(11) **EP 1 953 064 A2**
(43) Date of publication of application: **06.08.2008**
(21) Application number: 08001530.8
(22) Date of filing: 28.01.2008
(51) Int. Cl.: B62D 1/16

(54) **Variable gear ratio steering apparatus**

(30) Priority: 31.01.2007 JP 2007020387
(71) Applicant: FUJI KIKO Co., Ltd., Kosai-shi, Shizuoka 431-0431 (JP)
(72) Inventor: Inoue, Kyoichi, Kosai-shi Shizuoka 431-0431 (JP)
(74) Representative: Grünecker, Kinkeldey, Stockmair & Schwanhäusser Anwaltssozietät

(57) **Abstract**

A variable gear ratio steering apparatus includes a differential mechanism connected between an input shaft (2) and an output shaft (3). A differential case (4) is mounted to a housing for relative rotation. The differential case (4) is in meshing contact with the input shaft (2) and the output shaft (3) through bevel gears. A central shaft (6) is fixed to the differential case (4). Each of the input shaft (2) and the output shaft (3) has a central longitudinal bore (2a,3a) open at least at a longitudinal end (11,12) facing the central shaft (6). An input shaft bearing set (5) includes a radial bearing (5a) disposed between a lateral periphery of the central longitudinal bore (2a) of the input shaft and an outer lateral periphery of the central shaft (6), and a thrust bearing (5b) disposed between the back surface of the input bevel gear (11) and the first longitudinal end portion of the housing. An output shaft bearing set (55) is constructed similarly

## Description

### BACKGROUND OF THE INVENTION

The present invention relates generally to steering systems, and particularly to variable gear ratio steering systems provided with a differential gear mechanism for variable steering ratio.

Japanese Patent Application Publication No. 2006-290086, henceforth referred to as JP2006-290086, discloses a variable gear ratio steering apparatus that includes such a differential gear mechanism as employed in a driveline disposed between an engine and driving wheels in an automotive vehicle. JP2006-290086 shows in FIG. 5 a sectional view of the differential gear mechanism of the variable gear ratio steering apparatus. The differential gear mechanism includes an input shaft and an output shaft which are coaxially arranged. The input shaft is formed with a first bevel gear at one longitudinal end facing the output shaft. Similarly, the output shaft is formed with a second bevel gear at one longitudinal end facing the input shaft. A differential case is disposed generally between the input shaft and the output shaft, and supported for rotation with respect to the input shaft and the output shaft. The differential case includes a swivel shaft to which a third bevel gear is mounted for rotation. The third bevel gear is in meshing contact with the first and second bevel gears. A worm wheel is fixed to an outer lateral periphery of the differential case. The worm wheel is in meshing contact with a worm shaft connected to an output shaft of an electric motor. The differential case includes a pair of side parts for supporting bearings for allowing rotation of the input shaft and the output shaft, and a central part disposed between the side parts for supporting a bearing for allowing rotation of the third bevel gear.

### SUMMARY OF THE INVENTION

It is desirable to provide a variable gear ratio steering apparatus whose size is small, and thereby, easily mountable in a steering system. Specifically, it is desirable to provide a variable gear ratio steering apparatus whose longitudinal size is small, and thereby, easily mountable in a steering system.

According to one aspect of the present invention, a variable gear ratio steering apparatus comprises: a housing; a differential case mounted to the housing for relative rotation about an axis; a swivel shaft fixed to the differential case; a central shaft fixed to the swivel shaft, the central shaft having a longitudinal axis extending along the axis of rotation of the differential case; an input shaft having a longitudinal axis extending along the axis of rotation of the differential case, and having a first longitudinal end facing a first longitudinal end of the central shaft, and a second longitudinal end adapted to be connected to a steering shaft; an output shaft having a longitudinal axis extending along the axis of rotation of the differential case, and having a first longitudinal end facing a second longitudinal end of the central shaft, and a second longitudinal end adapted to be connected to a steering mechanism; an input bevel gear fixed to the first longitudinal end of the input shaft; an output bevel gear fixed to the first longitudinal end of the output shaft; an intermediate bevel gear mounted to the swivel shaft for relative rotation about the swivel shaft, the intermediate bevel gear being in meshing contact with the input bevel gear and the output bevel gear; a worm wheel fixed to the differential case, the worm wheel extending around the axis of rotation of the differential case; a motor mounted to the housing, the motor including a worm shaft being in meshing contact with the worm wheel; a differential case bearing set disposed between the differential case and the housing for allowing the relative rotation therebetween; an input shaft bearing set comprising: a radial bearing disposed between the input shaft and the central shaft for allowing relative rotation therebetween; and a thrust bearing disposed between the input shaft and the housing for allowing relative rotation therebetween; and an output shaft bearing set comprising: a radial bearing disposed between the output shaft and the central shaft for allowing relative rotation therebetween; and a thrust bearing disposed between the output shaft and the housing for allowing relative rotation therebetween. The variable gear ratio steering apparatus may be configured so that: the input shaft includes a central longitudinal bore open at least at the first longitudinal end thereof; the output shaft includes a central longitudinal bore open at least at the first longitudinal end thereof; the radial bearing of the input shaft bearing set is disposed between a lateral periphery of the central longitudinal bore of the input shaft and an outer lateral periphery of the central shaft for allowing relative rotation therebetween; and the radial bearing of the output shaft bearing set is disposed between a lateral periphery of the central longitudinal bore of the output shaft and an outer lateral periphery of the central shaft for allowing relative rotation therebetween. The variable gear ratio steering apparatus may be configured so that: the housing includes first and second longitudinal end portions; the input bevel gear includes a back surface facing the first longitudinal end portion of the housing; the output bevel gear includes a back surface facing the second longitudinal end portion of the housing; the thrust bearing of the input shaft bearing set is disposed between the back surface of the input bevel gear and the first longitudinal end portion of the housing for allowing relative rotation therebetween; and the thrust bearing of the output shaft bearing set is disposed between the back surface of the output bevel gear and the second longitudinal end portion of the housing for allowing relative rotation therebetween. The variable gear ratio steering apparatus may be configured so that: the radial bearing of the input shaft bearing set is identical to the radial bearing of the output shaft bearing set; the thrust bearing of the input shaft bearing set is identical to the thrust bearing of the output shaft bearing set; and the input bevel gear is identical to the output bevel gear. The variable gear ratio steering apparatus may be configured so that: the swivel shaft has a longitudinal axis perpendicular to the axis of rotation of the differential case; and the swivel shaft has a longitudinal end fixed to the differential case and a longitudinal end fixed to the central shaft. The variable gear ratio steering apparatus may be configured so that: the differential case comprises an annular central wheel having a longitudinal axis extending along the axis of rotation of the differential case; and the central wheel comprises a pair of semiannular central wheel parts. The variable gear ratio steering apparatus may be configured so that the central wheel parts are fitted to an inner lateral periphery of the worm wheel in such a manner that the worm wheel prevents the central wheel parts from moving radially of the worm wheel with respect to the worm wheel. The variable gear ratio steering apparatus may further comprise a reinforcing bar fixed between the differential case and the central shaft. The variable gear ratio steering apparatus may be configured so that: the swivel shaft has a longitudinal axis perpendicular to the axis of rotation of the differential case; the swivel shaft has a longitudinal end fixed to the differential case and a longitudinal end fixed to the central shaft; the reinforcing bar has a longitudinal axis perpendicular to the longitudinal axis of the swivel shaft and perpendicular to the axis of rotation of the differential case; and the reinforcing bar has a longitudinal end fixed to the differential case and a longitudinal end fixed to the central shaft. The variable gear ratio steering apparatus may configured so that: the differential case includes one of a projection and a recess at its outer lateral periphery; the worm wheel includes the other of the projection and the recess at its inner lateral periphery; and the projection is fitted to the recess in such a manner to prevent the differential case and the worm wheel from rotating relative to each other. The variable gear ratio steering apparatus may be configured so that the differential case comprises: a pair of annular side wheels having longitudinal axes extending along the axis of rotation of the differential case; and an annular central wheel disposed between the side wheels along the axis of rotation of the differential case, the central wheel having a longitudinal axis extending along the axis of rotation of the differential case. The variable gear ratio steering apparatus may be configured so that: the housing comprises first and second housing parts; the first housing part comprises a cylindrical portion having a longitudinal axis extending along the axis of rotation of the differential case, and a longitudinal end portion; the second housing part comprises a longitudinal end portion; and the first housing part is fixed to the second housing part so as to hold the side wheels between the longitudinal end portions of the first and second housing parts along the axis of rotation of the differential case, and to hold the central wheel and the worm wheel between the side wheels along the axis of rotation of the differential case. The variable gear ratio steering apparatus may be configured so that the differential case bearing set comprises: a radial bearing disposed between an outer lateral periphery of one of the side wheels and an inner lateral periphery of the housing for allowing relative rotation therebetween; and a thrust bearing disposed between an outer longitudinal periphery of one of the side wheels and an inner longitudinal periphery of the housing for allowing relative rotation therebetween. The variable gear ratio steering apparatus may be configured so that: each of the side wheels includes a recess at its longitudinal end; and the recess is fitted to a longitudinal end portion of the central wheel so as to position the central wheel with respect to the each of the side wheels. The variable gear ratio steering apparatus may be configured so that the differential case bearing set comprises: a radial bearing disposed between an outer lateral periphery of the differential case and an inner lateral periphery of the housing for allowing relative rotation therebetween; and a thrust bearing disposed between an outer longitudinal periphery of the differential case and an inner longitudinal periphery of the housing for allowing relative rotation therebetween.

### BRIEF DESCRIPTION OF THE DRAWINGS

FIG. 1 is a front sectional view of a variable gear ratio steering apparatus according to an embodiment of the present invention.

FIG. 2 is a right side sectional view of the variable gear ratio steering apparatus according to the embodiment.

FIG. 3 is an exploded perspective view of a partial set of components of the variable gear ratio steering apparatus according to the embodiment.

FIG. 4 is an exploded perspective view of a partial set of components of the variable gear ratio steering apparatus according to the embodiment, where the partial set includes an electric motor, a worm shaft and a lock mechanism.

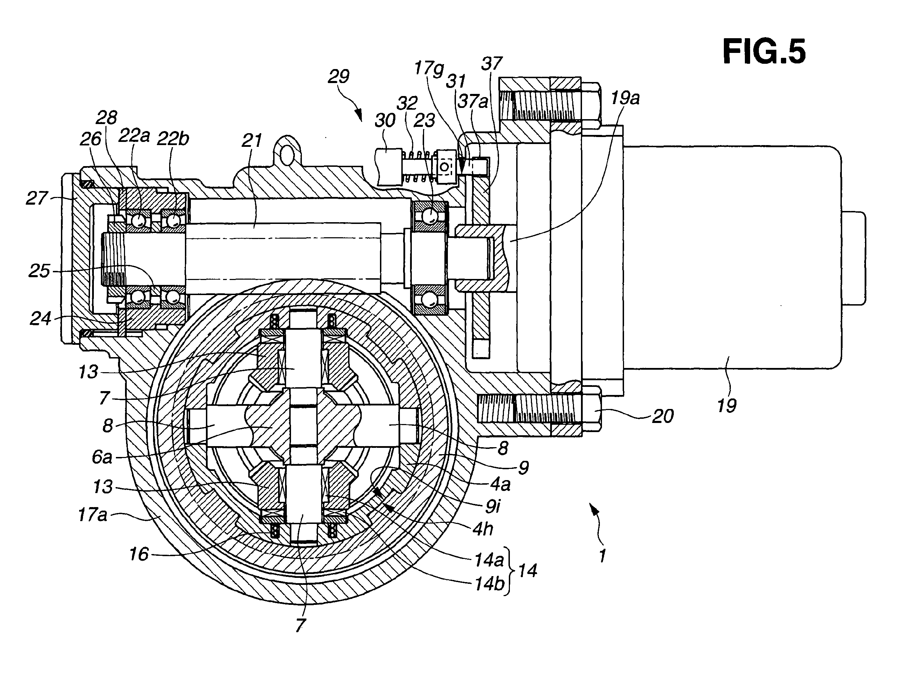

FIG. 5 is a right side sectional view of the variable gear ratio steering apparatus according to the embodiment under condition that an output shaft of the electric motor is locked by the lock mechanism.

FIG. 6 is a perspective view of a partial set of components of the variable gear ratio steering apparatus according to the embodiment, where the partial set includes the electric motor, the worm shaft and the lock mechanism.

FIG. 7 is a graph showing three different curves each of which defines the relationship between the rotation angle of an input shaft and the rotation speed of an output shaft in the variable gear ratio steering apparatus according to the embodiment.

### DETAILED DESCRIPTION OF THE INVENTION

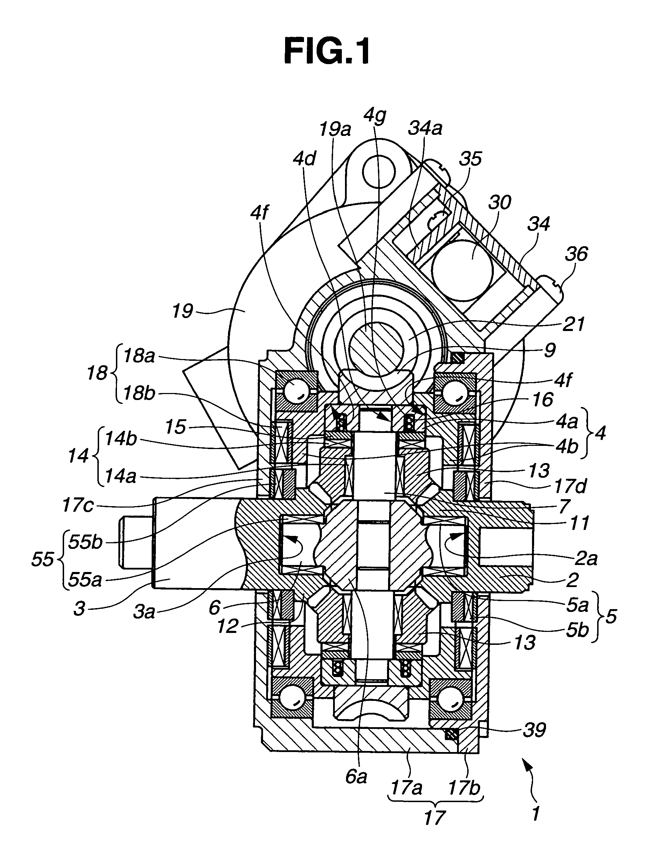

FIG. 1 shows a variable gear ratio steering apparatus 1 according to an embodiment of the present invention which may be employed between a steering shaft and a steering mechanism in an automotive steering system. As shown in FIG. 1, the variable gear ratio steering apparatus 1 includes a housing 17, an input shaft 2, an output shaft 3, and a differential case 4. The differential case 4 is mounted to the housing 17 for relative rotation about a longitudinal axis of the differential case 4. The input shaft 2 and the output shaft 3 have longitudinal axes extending along the axis of rotation of the differential case 4. The input shaft 2, the output shaft 3 and the differential case 4 are generally cylindrically formed, and arranged coaxially, extending horizontally as viewed in FIG. 1. The input shaft 2 has an inner longitudinal end on its left side and an outer longitudinal end on its right side as viewed in FIG. 1, where the inner longitudinal end faces the output shaft 3 (through a central shaft 6), and the outer longitudinal end is adapted to be connected to a steering shaft not shown connected to a steering wheel not shown. The output shaft 3 has an inner longitudinal end on its right side and an outer longitudinal end on its left side as viewed in FIG. 1, where the inner longitudinal end faces the input shaft 2 (through the central shaft 6), and the outer longitudinal end is adapted to be connected to a steering mechanism not shown for steering a set of steerable wheels not shown. The differential case 4 is disposed generally between the input shaft 2 and the output shaft 3, surrounding the inner longitudinal end of the input shaft 2 and the inner longitudinal end of the output shaft 3. The differential case 4 is supported relative to the input shaft 2 and the output shaft 3 for rotation about a common central longitudinal axis of the input shaft 2 and the output shaft 3.

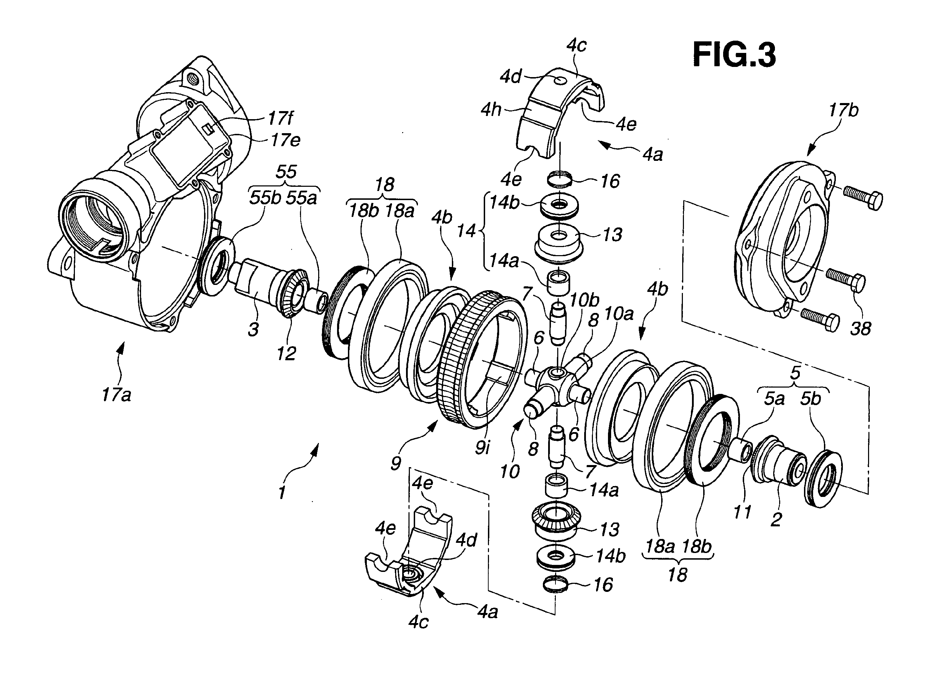

The differential case 4 is supported for rotation as follows. An input shaft bearing set 5 is a set of bearings disposed between the differential case 4 and the input shaft 2 for allowing relative rotation therebetween. An output shaft bearing set 55 is a set of bearings disposed between the differential case 4 and the output shaft 3 for allowing relative rotation therebetween. The input shaft 2 includes a cylindrical central longitudinal bore 2a open at least at the inner longitudinal end facing the output shaft 3. The central shaft 6 has a longitudinal axis extending along the axis of rotation of the differential case 4. A cylindrical longitudinal end portion of the central shaft 6 is supported in the central longitudinal bore 2a of the input shaft 2 for rotation. An input shaft radial bearing 5a is a radial bearing such as a needle bearing disposed between the input shaft 2 and the central shaft 6 for allowing relative rotation therebetween. Specifically, the input shaft radial bearing 5a is disposed between a lateral periphery of the central longitudinal bore 2a of the input shaft 2 and an outer lateral periphery of the longitudinal end portion of the central shaft 6 for allowing relative rotation therebetween and supporting them against radial loads. The input shaft radial bearing 5a constitutes the input shaft bearing set 5. Similarly as in the case of the input shaft 2, the output shaft 3 includes a cylindrical central longitudinal bore 3a open at least at the inner longitudinal end facing the input shaft 2. An opposite cylindrical longitudinal end portion of the central shaft 6 is supported in the central longitudinal bore 3a of the output shaft 3 for rotation. An output shaft radial bearing 55a is a radial bearing such as a needle bearing disposed between the output shaft 3 and the central shaft 6 for allowing relative rotation therebetween. Specifically, the output shaft radial bearing 55a is disposed between a lateral periphery of the central longitudinal bore 3a of the output shaft 3 and an outer lateral periphery of the opposite longitudinal end portion of the central shaft 6 for allowing relative rotation therebetween and supporting them against radial loads. The output shaft radial bearing 55a constitutes the output shaft bearing set 55. The output shaft radial bearing 55a may be identical to the input shaft radial bearing 5a. The central shaft 6 is fixed to the differential case 4 through two swivel shafts 7 and 7 and two reinforcing bars 8 and 8. Each swivel shaft 7 has a longitudinal axis perpendicular to the axis of rotation of the differential case 4 and the longitudinal axis of the central shaft 6, and has a longitudinal end fixed to the central shaft 6 and a longitudinal end fixed to an inner lateral periphery of the differential case 4. Each reinforcing bar 8 is connected and fixed between the central shaft 6 and the differential case 4. Specifically, each reinforcing bar 8 has a longitudinal axis perpendicular to the longitudinal axis of the swivel shaft 7 and perpendicular to the longitudinal axis of the central shaft 6 or the axis of rotation of the differential case 4, and has a longitudinal end fixed to the central shaft 6 and a longitudinal end fixed to an inner lateral periphery of the differential case 4. More specifically, as shown in FIG. 3, the central shaft 6, the reinforcing bars 8 and 8, and a boss portion 10a are formed integrally with each other, constituting a cross-shaped central shaft unit 10. The central shaft unit 10 includes fitting holes 10b and 10b at two opposite faces, where each fitting hole 10b extends perpendicularly of the longitudinal axis of the central shaft 6, and perpendicularly of the longitudinal axis of the reinforcing bars 8 and 8. Each swivel shaft 7 is fitted and fixed at its longitudinal end to a respective one of the fitting holes 10b. The central shaft 6 is thus fixed to the differential case 4 by the two swivel shafts 7 and 7 and the two reinforcing bars 8 and 8 which are arranged alternately at intervals of 90 degrees around the central shaft 6. The input shaft 2 and the output shaft 3 are thus supported relative to the differential case 4 for rotation. In other words, the differential case 4 is supported relative to the input shaft 2 for rotation and supported relative to the output shaft 3 for rotation.

The differential case 4 includes an annular or cylindrical central wheel 4a, and a pair of annular or cylindrical side wheels 4b and 4b. The central wheel 4a and the side wheels 4b and 4b have longitudinal axes extending along the axis of rotation of the differential case 4. The central wheel 4a is disposed between the side wheels 4b and 4b along the axis of rotation of the differential case 4 or along the longitudinal axis of the input shaft 2 and the output shaft 3. The central wheel 4a and the side wheels 4b and 4b are thus arranged coaxially. The central wheel 4a includes a pair of semiannular or semicylindrical central wheel parts 4c and 4c. A worm wheel 9 is fixed to the differential case 4, extending around the axis of rotation of the differential case 4. Specifically, the pair of central wheel parts 4c and 4c are fitted and fixed to an inner lateral periphery of the worm wheel 9, so that the central wheel parts 4c and 4c are joined together to form the central wheel 4a. The worm wheel 9 thus serves to prevent the central wheel parts 4c and 4c from moving radially of the worm wheel 9 away from each other with respect to the worm wheel 9. As shown in FIG. 3, each central wheel part 4c includes a fitting hole 4d in a circumferentially central position, and a pair of notches 4e and 4e at its circumferential ends. Each swivel shaft 7 is fitted and fixed at its outer longitudinal end to the fitting hole 4d of a respective one of the central wheel parts 4c and 4c. Each reinforcing bar 8 is fitted and fixed at its outer longitudinal end to a respective one of two fitting holes defined by the notches 4e of the pair of central wheel parts 4c and 4c. As shown in FIG. 1, each side wheel 4b includes a recess 4f at its inner longitudinal end. The recess 4f is adapted to be fitted to a longitudinal end portion of the central wheel 4a. Specifically, the recess 4f is adapted to be fitted to a corner of the central wheel 4a where the longitudinal end surface meet the outer lateral surface. The recess 4f serves to place the side wheel 4b in a right lateral position and in a right longitudinal position relative to the central wheel 4a.

The worm wheel 9 includes one of a set of projections and a set of recesses at its inner lateral periphery, and the central wheel 4a includes the other of the set of recesses and the set of projections at its outer lateral periphery, where the set of projections is adapted to engage with the set of recesses, so as to allow the central wheel 4a to be inserted in the longitudinal direction into, and fitted and fixed to the worm wheel 9, and so as to inhibit relative rotation between the central wheel 4a and the worm wheel 9. Specifically, as shown in FIG. 3, the central wheel 4a includes four recesses or grooves 4h arranged circumferentially at intervals of 90 degrees at its outer lateral periphery. Each groove 4h extends longitudinally of the differential case 4. On the other hand, the worm wheel 9 includes four projections 9i arranged circumferentially at intervals of 90 degrees at its inner lateral periphery. Each projection 9i extends longitudinally of the worm wheel 9. The projections 9i of the worm wheel 9 are fitted to respective ones of the grooves 4h in such a manner to prevent the differential case 4 and the worm wheel 9 from rotating relative to each other. The central wheel 4a is thus fixed to the worm wheel 9.

The input shaft 2 includes a portion defining a bevel gear referred to as input bevel gear 11 at its inner longitudinal end facing the output shaft 3. In other words, the input bevel gear 11 is fixed to the inner longitudinal end of the input shaft 2, facing the central shaft 6. Similarly, the output shaft 3 includes a portion defining a bevel gear referred to as output bevel gear 12 at its inner longitudinal end facing the input shaft 2. In other words, the output bevel gear 12 is fixed to the inner longitudinal end of the output shaft 3, facing the central shaft 6. The output bevel gear 12 may be identical to the input bevel gear 11. The input bevel gear 11 and the output bevel gear 12 are naturally supported for rotation about the central longitudinal axis of the input shaft 2 and the output shaft 3. The input bevel gear 11 and the output bevel gear 12 are in meshing contact with two bevel gears referred to as intermediate bevel gears 13 and 13 which are disposed in the differential case 4, and mounted to respective ones of the swivel shafts 7 and 7 for relative rotation about the respective ones of the swivel shafts 7 and 7 on respective ones of two sets of bearings referred to as intermediate bevel gear bearing sets 14 and 14. Each intermediate bevel gear bearing set 14 includes an intermediate bevel gear radial bearing 14a disposed between an outer lateral periphery of the swivel shaft 7 and an inner lateral periphery of the intermediate bevel gear 13 for allowing relative rotation therebetween and supporting them against radial loads, and an intermediate bevel gear thrust bearing 14b disposed between an inner lateral periphery of the central wheel 4a and a back surface of the intermediate bevel gear 13 for allowing relative rotation therebetween and supporting them against thrust loads. The central wheel 4a includes two circular grooves 4g and 4g at its inner lateral periphery, where the grooves 4g extend circumferentially around respective ones of the fitting holes 4d and 4d. A coil spring 16 is mounted in each groove 4g for biasing the intermediate bevel gear thrust bearing 14b and the intermediate bevel gear 13 toward the input bevel gear 11 and the output bevel gear 12 so as to keep the meshing contact among them.

The housing 17 is supported for rotation with respect to the differential case 4, covering the differential case 4. A set of bearings referred to as differential case bearing set 18 is disposed between the housing 17 and the differential case 4 for allowing relative rotation therebetween. The housing 17 includes a cylindrical portion with a longitudinal axis extending along the longitudinal axis of the input shaft 2 and the output shaft 3. The cylindrical portion of the housing 17 includes a first housing part 17a and a second housing part 17b. The first housing part 17a includes a cylindrical portion having a longitudinal axis extending along the axis of rotation of the differential case 4, and a longitudinal end portion 17c. The second housing part 17b includes a longitudinal end portion 17d. The input bevel gear 11 includes a back surface facing the longitudinal end portion 17d. The output bevel gear 12 includes a back surface facing the longitudinal end portion 17c. A thrust bearing referred to as input shaft thrust bearing 5b is disposed between the input shaft 2 and the housing 17 for allowing relative rotation therebetween. Specifically, the input shaft thrust bearing 5b is disposed between the back surface of the input bevel gear 11 and the longitudinal end portion 17d of the housing 17 for allowing relative rotation therebetween and supporting them against thrust loads. The input shaft thrust bearing 5b constitutes the input shaft bearing set 5. Similarly, a thrust bearing referred to as output shaft thrust bearing 55b is disposed between the output shaft 3 and the housing 17 for allowing relative rotation therebetween. Specifically, the output shaft thrust bearing 55b is disposed between the back surface of the output bevel gear 12 and the longitudinal end portion 17c of the housing 17 for allowing relative rotation therebetween and supporting them against thrust loads. The output shaft thrust bearing 55b constitutes the output shaft bearing set 55. The output shaft thrust bearing 55b may be identical to the input shaft thrust bearing 5b. The first housing part 17a and the second housing part 17b are fastened by a fastening device such as a set of three bolts 38. An O ring 39 is disposed between the first housing part 17a and the second housing part 17b. The first housing part 17a is thus fixed to the second housing part 17b so as to hold the side wheels 4b and 4b between the longitudinal end portions 17c and 17d of the first and second housing parts 17a and 17b along the axis of rotation of the differential case 4, and to hold the central wheel 4a and the worm wheel 9 between the side wheels 4b and 4b along the axis of rotation of the differential case 4.

The differential case bearing set 18 includes two radial bearings referred to as differential case radial bearings 18a and 18a and two thrust bearings referred to as differential case thrust bearings 18b and 18b. Each differential case radial bearing 18a is disposed between an inner lateral peripheral surface of a respective one of the first and second housing parts 17a and 17b and an outer lateral peripheral surface of a respective one of the side wheels 4b and 4b for allowing relative rotation therebetween and supporting them against radial loads. Each differential case thrust bearing 18b is disposed between an outer longitudinal peripheral surface of a respective one of the side wheels 4b and 4b and an inner longitudinal peripheral surface of a respective one of the longitudinal end portions 17c and 17d for allowing relative rotation therebetween and supporting them against thrust loads.

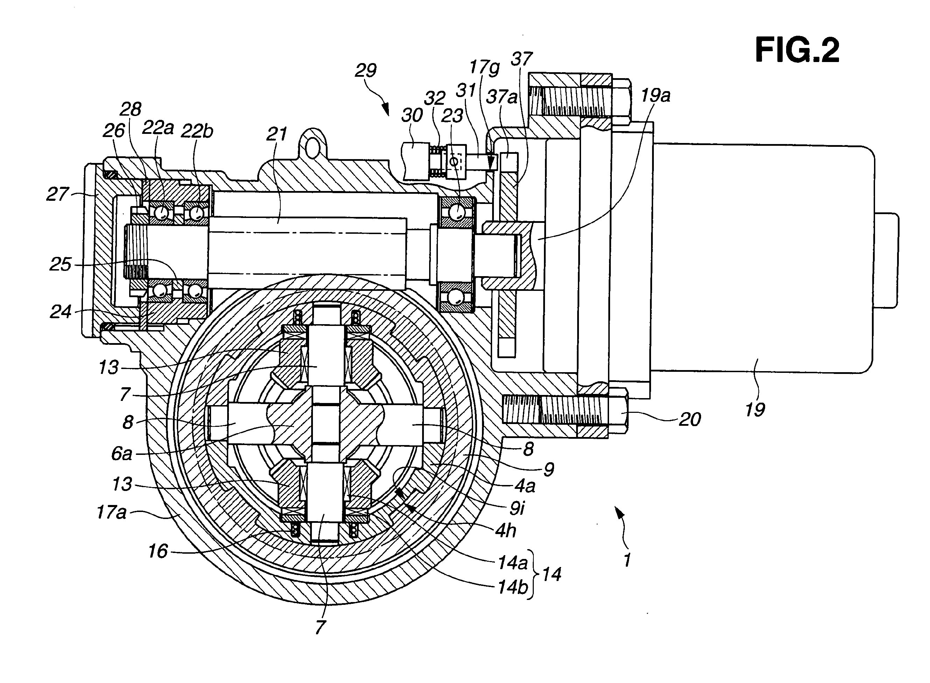

As shown in FIG. 2, an electric motor 19 is mounted or fastened to the first housing part 17a by a fastening device such as a set of bolts 20. A worm shaft 21 is fixed at one longitudinal end to a tip of the an output shaft 19a of the electric motor 19 for rotation therewith. The worm shaft 21 is disposed within the first housing part 17a, and supported for rotation with respect to the first housing part 17a on a pair of first and second angular ball bearings 22a and 22b and a deep-grooved ball bearing 23. The first and second angular ball bearings 22a and 22b each serve as a radial bearing and a thrust bearing. The worm shaft 21 is in meshing contact with the worm wheel 9 so that rotary motion of the worm shaft 21 is converted into rotary motion of the worm wheel 9. The pair of first and second angular ball bearings 22a and 22b are supported relative to the first housing part 17a through an outer tube 24 and an inner tube 25. A nut 26 is fixed to a tip of the worm shaft 21 for restricting the movement of the first and second angular ball bearings 22a and 22b with respect to the worm shaft 21 along the longitudinal axis of the worm shaft 21. A cover 27 restricts the movement of the outer tube 24 with respect to the first housing part 17a, and thereby restricts the movement of the first and second angular ball bearings 22a and 22b with respect to the first housing part 17a. A flat washer 28 is disposed between the cover 27 and the outer tube 24.

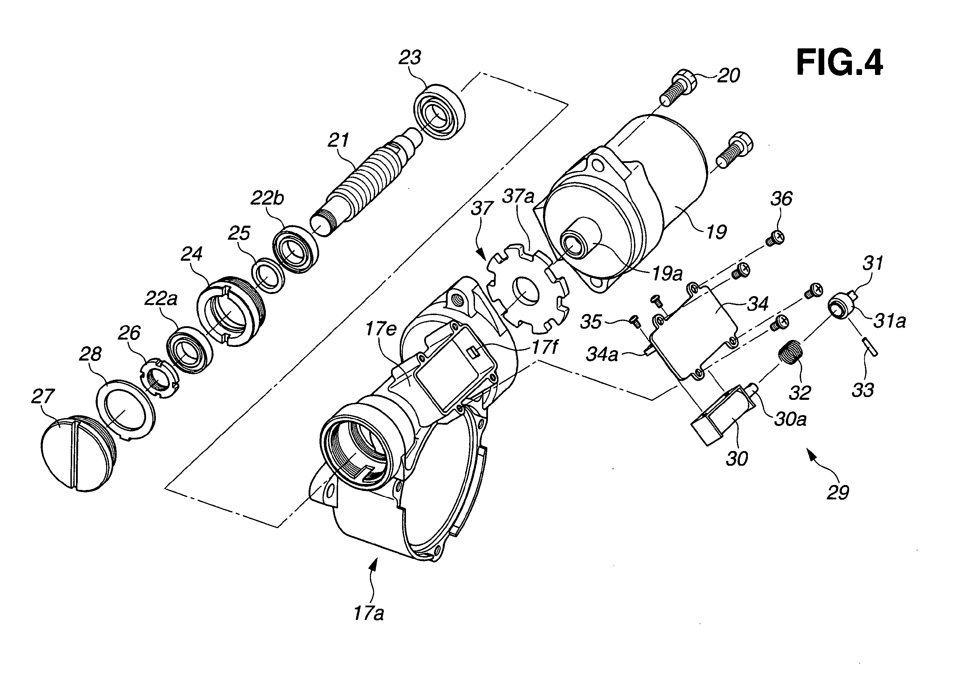

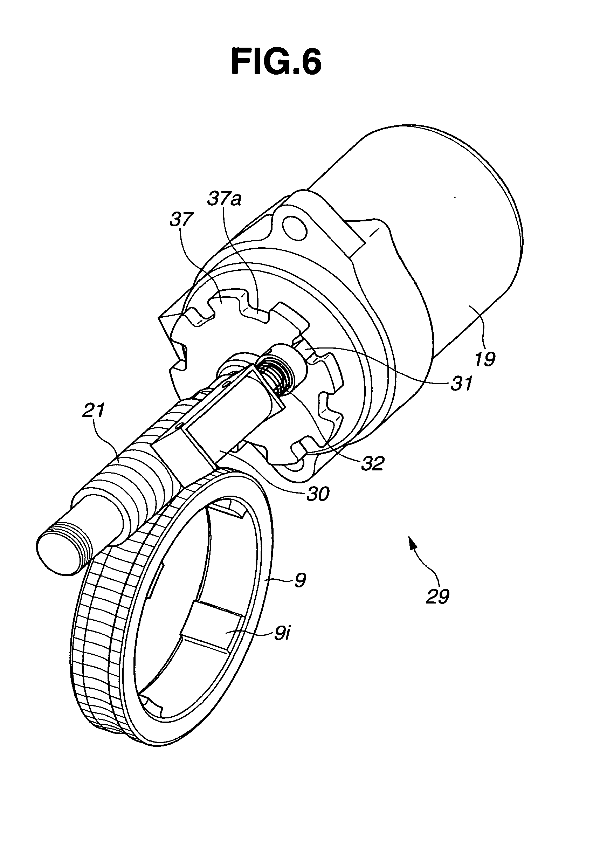

The variable gear ratio steering apparatus 1 includes a lock mechanism 29 arranged to lock the worm shaft 21 with respect to the housing 17. When the worm shaft 21 is locked by the lock mechanism 29, the rotation speed of the input shaft 2 is equal in magnitude to that of the output shaft 3. For example, when the variable gear ratio steering apparatus 1 is failed, the lock mechanism 29 locks the worm shaft 21. As shown in FIG. 6, the lock mechanism 29 is disposed close to the worm shaft 21, extending along the longitudinal axis of the worm shaft 21. The lock mechanism 29 is assembled as shown in FIG. 4. The first housing part 17a is formed with an external container portion 17e in the form of an open rectangular box. An electromagnetic valve 30 is disposed in the external container portion 17e. The electromagnetic valve 30 includes a spool 30a that is configured to be put back in a casing when the electromagnetic valve 30 is energized, and to be put out of the casing when the electromagnetic valve 30 is de-energized. The spool 30a extends outwardly from the external container portion 17e through a through hole 17f toward the electric motor 19. A lock pin 31 is fixed to the tip of the spool 30a by a pin 33. The lock pin 31 includes a spring seat portion 31a. A coil spring 32 is disposed between the spring seat portion 31a of the lock pin 31 and the casing of the electromagnetic valve 30, surrounding the spool 30a. The coil spring 32 biases the lock pin 31 toward the electric motor 19. The spool 30a has a longitudinal axis substantially parallel to the output shaft 19a of the electric motor 19. A cover 34 covers the opening of the external container portion 17e. The cover 34 is formed with a mounting portion 34a projecting toward the bottom of the external container portion 17e. The electromagnetic valve 30 is fixed to the mounting portion 34a by a set of two screws 35. The cover 34 is fixed to the periphery of the opening of the external container portion 17e by a set of four screws 36. On the other hand, a disc-shaped lock plate 37 is fixed to the output shaft 19a of the electric motor 19, extending perpendicularly of the longitudinal axis of the output shaft 19a. The lock plate 37 includes a plurality of notches 37a arranged circumferentially at the outer lateral periphery and evenly spaced. As shown in FIG. 2, the first housing part 17a includes a through hole 17g facing the through hole 17f for allowing the lock pin 31 to travel through the through hole 17f and the through hole 17g in the longitudinal direction of the lock plate 37. When one of the notches 37a is identical in the circumferential position to the through hole 17g, the lock pin 31 is allowed to travel through the notch 37a.

The following describes how the variable gear ratio steering apparatus 1 operates and functions. When the electromagnetic valve 30 of the lock mechanism 29 is being energized, the spool 30a is held within the casing against the biasing force of the coil spring 32, so that the lock pin 31 keeps away from the notches 37a of the lock plate 37. This allows the electric motor 19 to rotate the differential case 4 with respect to the housing 17, establishing a variable gear ratio steering mode. On the other hand, when the electromagnetic valve 30 of the lock mechanism 29 is de-energized due to malfunctions, the spool 30a is put out from the casing of the electromagnetic valve 30 by the biasing force of the coil spring 32, so that the lock pin 31 engages with one of the notches 37a of the lock plate 37 when the notch 37a is in position. This prevents the electric motor 19 from rotating the differential case 4 with respect to the housing 17, establishing a fixed gear ratio steering mode.

When the steering wheel is turned so as to turn the steering shaft, then the steering shaft rotates the input shaft 2 of the variable gear ratio steering apparatus 1. According to the rotation of the input shaft 2, the input bevel gear 11 at the tip of the input shaft 2 rotates, the intermediate bevel gears 13 and 13 rotate, and then the output bevel gear 12 and the output shaft 3 rotate in the opposite direction to the rotation of the input shaft 2.

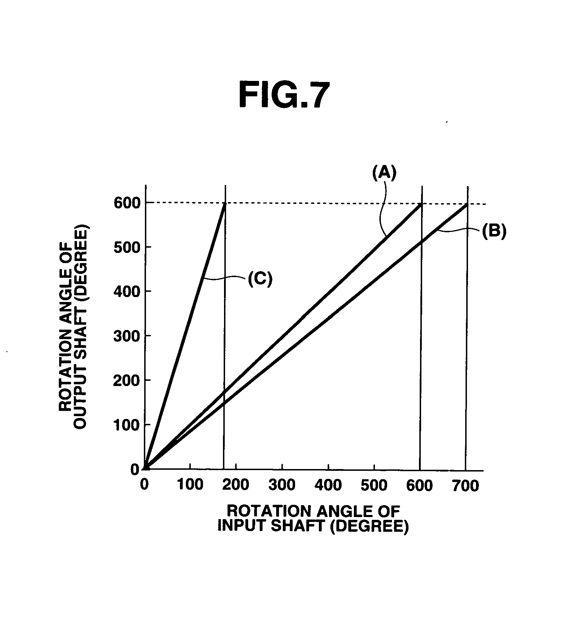

In the variable gear ratio steering mode, the rotation speed of the electric motor 19 is controlled in accordance with vehicle speed. The rotation of the output shaft 19a of the electric motor 19 is converted and transmitted through the worm shaft 21 and the worm wheel 9 to the differential case 4. The rotation of the differential case 4 causes an increase or decrease in the rotation of the output bevel gear 12. FIG. 7 shows three curves (A), (B) and (C) defining the relationship between the rotation angle of the input shaft 2 and the rotation angle of the output shaft 3. When the vehicle speed is in a middle range, the variable gear ratio steering apparatus 1 is controlled to attain the curve (A) in which the rotation angle of the input shaft 2 is identical to the rotation angle of the output shaft 3. When the vehicle speed is in a high range, the variable gear ratio steering apparatus 1 is controlled to attain the curve (B) in which the rotation speed of the output shaft 3 is lower than that of the input shaft 2 so that the steerable wheels are steered slowly with respect to the steering wheel. When the vehicle speed is in a low range, the variable gear ratio steering apparatus 1 is controlled to attain the curve (C) in which the rotation speed of the output shaft 3 is higher than that of the input shaft 2 so that the steerable wheels are steered quickly with respect to the steering wheel.

On the other hand, when the variable gear ratio steering apparatus 1 is failed, the variable gear ratio steering apparatus 1 enters the fixed gear ratio steering mode in which the differential case 4 is fixed with respect to the housing 17. In the fixed gear ratio steering mode, the rotation speed of the output shaft 3 is identical to that of the input shaft 2, as in the case of the curve (A) shown in FIG. 7. This allows to drive the vehicle safely, even when the variable gear ratio steering apparatus 1 is being failed.

The following describes advantageous effects according to the present embodiment. The variable gear ratio steering apparatus according to JP2006-290086 includes a single bearing between an input shaft and a differential case for allowing relative rotation therebetween and supporting them against radial loads and thrust loads. In contrast, according to the present embodiment, the provision of the central longitudinal bore 2a of the input shaft 2, the central longitudinal bore 3a of the output shaft 3 and the central shaft 6 allows to implement the input shaft bearing set 5 by the combination of the input shaft radial bearing 5a and the input shaft thrust bearing 5b. Since the size of the input shaft thrust bearing 5b along the longitudinal direction of the input shaft 2 and the output shaft 3 is relatively small, the longitudinal size of the housing 17 is relatively small. The variable gear ratio steering apparatus 1 is thus formed compact, particularly in the longitudinal direction.

According to the construction that the central wheel 4a includes the pair of the central wheel parts 4c and 4c, it is easy to mount the intermediate bevel gear 13 to the swivel shaft 7 connected radially between the central shaft 6 and the differential case 4. Since the worm wheel 9 serves to join the pair of the central wheel parts 4c and 4c together, no additional fastening device is needed to join the central wheel parts 4c and 4c together.

According to the construction that the worm wheel 9 and the central wheel 4a are fitted to each other in such a manner that the projections 9i engages the grooves 4h, the worm wheel 9 is fixed to the differential case 4 with no circumferential slip.

According to the construction that the first and second housing parts 17a and 17b are fastened by the bolts 38 to form the housing 17, the first and second housing parts 17a and 17b serve to restrict axial movement of all of the input shaft 2, the output shaft 3, the worm wheel 9, the central wheel 4a and the pair of side wheels 4b and 4b. Therefore, it is unnecessary to fasten each of them to another of them by a fastening device. According to the construction that the differential case bearing set 18 is implemented by the combination of the differential case radial bearing 18a and the differential case thrust bearing 18b, the longitudinal size of the housing 17 is relatively small, because the longitudinal length of the differential case radial bearing 18a is relatively small as compared to a case where a single bearing is employed as a differential case bearing set.

According to the construction that the central shaft 6 is fixed to the differential case 4 through the swivel shafts 7 and the reinforcing bars 8, the central shaft 6 is rigidly supported with respect to the differential case 4 so that the axis of rotation of the central shaft 6 keeps identical to that of the differential case 4 with no deviation and no inclination. This allows to rigidly support the input shaft 2 and the output shaft 3, although the input shaft 2 and the output shaft 3 are not directly supported for rotation by the housing 17 or the differential case 4 but supported for rotation by the central shaft 6. This also allows to form compact the housing 17 or the differential case 4, and thereby form compact the variable gear ratio steering apparatus 1.

The variable gear ratio steering apparatus 1 may be modified as follows. Although the differential case 4 is composed of the pair of central wheel parts 4c and 4c and the pair of side wheels 4b and 4b in the embodiment described above, the differential case 4 may be formed as one piece. Although the variable gear ratio steering apparatus 1 includes the two intermediate bevel gears 13 and 13 in the embodiment described above, the variable gear ratio steering apparatus 1 may include four intermediate bevel gears 13, where two intermediate bevel gears 13 are mounted to two swivel shafts 7 and the other two intermediate bevel gears 13 are mounted to two reinforcing bars 8 in such a manner that each of the other two intermediate bevel gears 13 is supported for rotation around the reinforcing bar 8.

In contrast to the present embodiment, according to the construction disclosed in JP2006-290086, the longitudinal size of the housing is relatively large at least for the following reasons. As described above, the differential case according to JP2006-290086 is composed of a pair of side parts for supporting bearings for allowing rotation of the input shaft and the output shaft, and a central part disposed between the side parts for supporting a bearing for allowing rotation of the third bevel gear. Naturally, the longitudinal size of this central part is larger than that of the central wheel 4a according to the embodiment. The input shaft according to JP2006-290086 is supported on a bearing relative to the differential case and the differential case is supported on a bearing relative to the housing. The provision of these bearings results in an increase in the longitudinal size of the housing.

This application is based on a prior Japanese Patent Application No. 2007-20387 filed on January 31, 2007. The entire contents of this Japanese Patent Application No. 2007-20387 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A variable gear ratio steering apparatus comprising:
a housing (17);
a differential case (4) mounted to the housing (17) for relative rotation about an axis;
a swivel shaft (7) fixed to the differential case (4);
a central shaft (6) fixed to the swivel shaft (7), the central shaft (6) having a longitudinal axis extending along the axis of rotation of the differential case (4);
an input shaft (2) having a longitudinal axis extending along the axis of rotation of the differential case (4), and having a first longitudinal end (11) facing a first longitudinal end of the central shaft (6), and a second longitudinal end adapted to be connected to a steering shaft;
an output shaft (3) having a longitudinal axis extending along the axis of rotation of the differential case (4), and having a first longitudinal end (12) facing a second longitudinal end of the central shaft (6), and a second longitudinal end adapted to be connected to a steering mechanism;
an input bevel gear (11) fixed to the first longitudinal end of the input shaft (2);
an output bevel gear (12) fixed to the first longitudinal end of the output shaft (3);
an intermediate bevel gear (13) mounted to the swivel shaft (7) for relative rotation about the swivel shaft (7), the intermediate bevel gear (13) being in meshing contact with the input bevel gear (11) and the output bevel gear (12);
a worm wheel (9) fixed to the differential case (4), the worm wheel (9) extending around the axis of rotation of the differential case (4);
a motor (19) mounted to the housing (17), the motor (19) including a worm shaft (21) being in meshing contact with the worm wheel (9);
a differential case bearing set (18) disposed between the differential case (4) and the housing (17) for allowing the relative rotation therebetween;
an input shaft bearing set (5) comprising:
a radial bearing (5a) disposed between the input shaft (2) and the central shaft (6) for allowing relative rotation therebetween; and
a thrust bearing (5b) disposed between the input shaft (2) and the housing (17) for allowing relative rotation therebetween; and
an output shaft bearing set (55) comprising:
a radial bearing (55a) disposed between the output shaft (3) and the central shaft (6) for allowing relative rotation therebetween; and
a thrust bearing (55b) disposed between the output shaft (3) and the housing (17) for allowing relative rotation therebetween.

2. The variable gear ratio steering apparatus as claimed in Claim 1, wherein:
the input shaft (2) includes a central longitudinal bore (2a) open at least at the first longitudinal end (11) thereof;
the output shaft (3) includes a central longitudinal bore (3a) open at least at the first longitudinal end (12) thereof;
the radial bearing (5a) of the input shaft bearing set (5) is disposed between a lateral periphery of the central longitudinal bore (2a) of the input shaft (2) and an outer lateral periphery of the central shaft (6) for allowing relative rotation therebetween; and
the radial bearing (55a) of the output shaft bearing set (55) is disposed between a lateral periphery of the central longitudinal bore (3a) of the output shaft (3) and an outer lateral periphery of the central shaft (6) for allowing relative rotation therebetween.

3. The variable gear ratio steering apparatus as claimed in Claim 1, wherein:
the housing (17) includes first and second longitudinal end portions (17d, 17c);
the input bevel gear (11) includes a back surface facing the first longitudinal end portion (17d) of the housing (17);
the output bevel gear (12) includes a back surface facing the second longitudinal end portion (17c) of the housing (17);
the thrust bearing (5b) of the input shaft bearing set (5) is disposed between the back surface of the input bevel gear (11) and the first longitudinal end portion (17d) of the housing (17) for allowing relative rotation therebetween; and
the thrust bearing (55b) of the output shaft bearing set (55) is disposed between the back surface of the output bevel gear (12) and the second longitudinal end portion (17c) of the housing (17) for allowing relative rotation therebetween.

4. The variable gear ratio steering apparatus as claimed in Claim 1, wherein:
the radial bearing (5a) of the input shaft bearing set (5) is identical to the radial bearing (55a) of the output shaft bearing set (55);
the thrust bearing (5b) of the input shaft bearing set (5) is identical to the thrust bearing (55b) of the output shaft bearing set (55); and
the input bevel gear (11) is identical to the output bevel gear (12).

5. The variable gear ratio steering apparatus as claimed in Claim 1, wherein:
the swivel shaft (7) has a longitudinal axis perpendicular to the axis of rotation of the differential case (4); and
the swivel shaft (7) has a longitudinal end fixed to the differential case (4) and a longitudinal end fixed to the central shaft (6).

6. The variable gear ratio steering apparatus as claimed in Claim 1, wherein:
the differential case (4) comprises an annular central wheel (4a) having a longitudinal axis extending along the axis of rotation of the differential case (4); and
the central wheel (4a) comprises a pair of semiannular central wheel parts (4c, 4c).

7. The variable gear ratio steering apparatus as claimed in Claim 6, wherein the central wheel parts (4c, 4c) are fitted to an inner lateral periphery of the worm wheel (9) in such a manner that the worm wheel (9) prevents the central wheel parts (4c, 4c) from moving radially of the worm wheel (9) with respect to the worm wheel (9).

8. The variable gear ratio steering apparatus as claimed in Claim 1, further comprising:
a reinforcing bar (8) fixed between the differential case (4) and the central shaft (6).

9. The variable gear ratio steering apparatus as claimed in Claim 8, wherein:
the swivel shaft (7) has a longitudinal axis perpendicular to the axis of rotation of the differential case (4);
the swivel shaft (7) has a longitudinal end fixed to the differential case (4) and a longitudinal end fixed to the central shaft (6);
the reinforcing bar (8) has a longitudinal axis perpendicular to the longitudinal axis of the swivel shaft (7) and perpendicular to the axis of rotation of the differential case (4); and
the reinforcing bar (8) has a longitudinal end fixed to the differential case (4) and a longitudinal end fixed to the central shaft (6).

10. The variable gear ratio steering apparatus as claimed in Claim 1, wherein:
the differential case (4) includes one of a projection and a recess (4h) at its outer lateral periphery;
the worm wheel (9) includes the other of the projection and the recess (9i) at its inner lateral periphery; and
the projection (9i) is fitted to the recess (4h) in such a manner to prevent the differential case (4) and the worm wheel (9) from rotating relative to each other.

11. The variable gear ratio steering apparatus as claimed in Claim 1, wherein the differential case (4) comprises:
a pair of annular side wheels (4b, 4b) having longitudinal axes extending along the axis of rotation of the differential case (4); and
an annular central wheel (4a) disposed between the side wheels (4b, 4b) along the axis of rotation of the differential case (4), the central wheel (4a) having a longitudinal axis extending along the axis of rotation of the differential case (4).

12. The variable gear ratio steering apparatus as claimed in Claim 11, wherein:
the housing (17) comprises first and second housing parts (17a, 17b);
the first housing part (17a) comprises a cylindrical portion having a longitudinal axis extending along the axis of rotation of the differential case (4), and a longitudinal end portion (17c);
the second housing part (17b) comprises a longitudinal end portion (17d); and
the first housing part (17a) is fixed to the second housing part (17b) so as to hold the side wheels (4b) between the longitudinal end portions (17c, 17d) of the first and second housing parts (17a, 17b) along the axis of rotation of the differential case (4), and to hold the central wheel (4a) and the worm wheel (9) between the side wheels (4b) along the axis of rotation of the differential case (4).

13. The variable gear ratio steering apparatus as claimed in Claim 11, wherein the differential case bearing set (18) comprises:
a radial bearing (18a) disposed between an outer lateral periphery of one of the side wheels (4b, 4b) and an inner lateral periphery of the housing (17) for allowing relative rotation therebetween; and
a thrust bearing (18b) disposed between an outer longitudinal periphery of one of the side wheels (4b, 4b) and an inner longitudinal periphery of the housing (17) for allowing relative rotation therebetween.

14. The variable gear ratio steering apparatus as claimed in Claim 11, wherein:
each of the side wheels (4b, 4b) includes a recess (4f) at its longitudinal end; and
the recess (4f) is fitted to a longitudinal end portion of the central wheel (4a) so as to position the central wheel (4a) with respect to the each of the side wheels (4b, 4b).

15. The variable gear ratio steering apparatus as claimed in Claim 1, wherein the differential case bearing set (18) comprises:
a radial bearing (18a) disposed between an outer lateral periphery of the differential case (4) and an inner lateral periphery of the housing (17) for allowing relative rotation therebetween; and
a thrust bearing (18b) disposed between an outer longitudinal periphery of the differential case (4) and an inner longitudinal periphery of the housing (17) for allowing relative rotation therebetween.
